# FASCICULE DE BREVET EUROPEEN

(11) **EP 0 695 616 B1**
(45) Date de publication et mention de la délivrance du brevet: **22.05.1996**
(21) Numéro de dépôt: 95100431.6
(22) Date de dépôt: 13.01.1995
(51) Int. Cl.: B29C 45/14

(54) **Procédé pour la fabrication de pièces en matière plastique comportant une portion rigide et une portion en mousse souple**
Verfahren zum Herstellen von Kunststoffengegenständen mit einem festen Teil und einem weichen Schaumstoffteil
Method for producing plastic articles comprising a rigid part and a soft foam part

(30) Priorité: 04.08.1994 FR 9409834
(43) Date de publication de la demande: 07.02.1996
(73) Titulaire: NEYR PLASTIQUES (S.A.), F-01580 Izernore (FR)
(72) Inventeur: Antonicelli, Francis, F-01460 La Cluse (FR)
(74) Mandataire: Bossard, Jacques-René

(56) Documents cités:
- EP-A- 0 268 954
- EP-A- 0 305 969
- WO-A-93/00216
- PATENT ABSTRACTS OF JAPAN vol. 13 no. 425 (M-873) [3773] ,21 Septembre 1989 & JP-A-01 163035 (NIPPON PLAST CO LTD)

## Description

La présente invention est relative à la fabrication des articles ou pièces comportant une première portion en matière plastique rigide, solidaire sur au moins une face d'une seconde portion, ou couche, d'un matériau poreux souple, ou mousse. De telles pièces sont utilisées notamment dans l'industrie automobile, mais peuvent recevoir de nombreuses applications, liées à la conjonction de leur rigidité et des propriétés physiques de la mousse.

Ainsi, de telles pièces sont décrites dans les brevets US 3,493,643 et 4,077,672 et les brevets européens 0187863 et 0268954 avec leurs procédés de fabrication.

Ces procédés consistent, dans l'ensemble, à mouler ces pièces par injection de la matière plastique à l'état fondu dans un moule sur au moins une face duquel est placée la couche de matériau poreux souple, divers moyens étant proposés pour que la matière injectée se lie superficiellement avec le matériau poreux, mais sans le pénétrer en profondeur, ce qui lui ferait perdre ses qualités de mousse en le rigidifiant.

Ainsi, dès 1965, le brevet US 3,493,643 décrit un procédé de ce genre dans lequel le moule comprime la couche de matériau poreux à un point tel que ses pores deviennent trop petits pour permettre la pénétration de la matière plastique fondue, à l'exception d'une zone limitée, dans laquelle le matériau poreux est comparativement moins comprimé, la jonction s'opérant donc uniquement dans cette zone où la matière fondue pénètre superficiellement dans la couche de matériau poreux.

Dans le brevet US 4,077,672, le matériau poreux est une éponge comprimée de manière uniforme, de sorte qu'une petite quantité seulement de la matière plastique pénètre dans la mousse tandis que la plus grande partie adhère à sa surface extérieure.

Dans les deux cas, il y a donc pénétration, même faible, de la matière plastique fondue, dans le matériau poreux souple, ce qui diminue d'autant le volume de ce dernier que l'on peut considérer comme "utile".

A l'inverse, dans le brevet européen 268954, sur lequel repose le préambule de la revendication 1, la matière plastique fondue est injectée entre deux couches de matériau poreux souple soumises à une très forte compression l'une contre l'autre, dans des conditions de pression d'injection telles que lesdites deux couches sont écartées l'une de l'autre par la matière plastique en fusion sur laquelle elles se fixent sous l'effet de cette compression. Néanmoins, il est encore admis dans ce document que la matière injectée pénètre dans la zone superficielle de la mousse comprimée.

Pour éviter cet inconvénient, le brevet européen 187863 décrit un procédé dans lequel la mousse est préalablement recouverte d'une pellicule protectrice, puis la matière plastique fondue est coulée par dessus, et seulement alors le moule est fermé en comprimant l'ensemble. Il est évident qu'il n'y a aucune pénétration de la matière fondue dans la mousse, mais à l'inverse, la présence de la pellicule protectrice affecte la qualité de la liaison entre les deux portions de la pièce.

La présente invention permet d'éliminer tous les inconvénients de ces diverses techniques antérieures, grâce à un moyen simple et efficace d'empêcher la matière plastique fondue de pénétrer dans les pores du matériau poreux souple au moment de l'injection, mais n'interférant pas avec la solidité de leur liaison.

A cet effet, selon l'invention, dans un procédé du type dans lequel une matière plastique fondue est injectée dans un moule dans au moins un élément duquel est disposée une couche de matériau poreux souple, soumise par fermeture du moule à une compression en rétrécissant les pores pour empêcher au moins partiellement la matière fondue de pénétrer dans ces pores, l'invention réside en ce que, préalablement à ladite compression, la zone superficielle de la matière poreuse souple est soumise à une humidification de manière telle que les cellules superficielles ouvertes de ce matériau soient remplies d'eau, s'opposant ainsi à la pénétration de la matière plastique fondue au moment de l'injection, cette eau s'évaporant à l'achèvement du cycle d'injection de sorte que la couche de matériau poreux reprend son volume initial tout en étant fixée sur la matière plastique rigide.

Grâce à ce moyen, il est possible à la fois d'empêcher la pénétration de la matière plastique dans la mousse et de réduire la force de compression appliquée à la mousse, qui doit seulement demeurer inférieure à la pression d'injection de la matière plastique fondue.

Dans le cas, fréquent, d'une plaque rigide recouverte de mousse sur ses deux faces, le procédé est conduit de manière semblable, les deux couches de mousse étant disposées dans les deux éléments du moule et humidifiées avant fermeture du moule et compression, la matière plastique étant injectée entre les deux couches de manière à les écarter d'une distance égale à l'épaisseur de la plaque rigide, sans pénétrer dans la mousse dont les pores sont remplis d'eau, par définition incompressible.

Bien entendu, la quantité d'eau utilisée sera fonction à la fois de la densité et de l'épaisseur de la mousse ainsi que de la pression d'injection, tous ces paramètres étant interdépendants.

Les articles ou pièces réalisés par le procédé décrit ci-dessus sont destinés notamment mais non exclusivement à l'industrie automobile, tels que par exemple les clapets ou volets pour l'obturation des conduites de ventilation.

A titre d'illustration de la mise en oeuvre du procédé selon l'invention, on décrit ci-après à titre d'exemple non limitatif la réalisation d'un volet d'obturation pour conduits de ventilation, utilisable notamment dans l'industrie automobile, et se composant d'un plateau rectangulaire en matière plastique (par exemple en polypropylène, en ABS ou en polyamide) rigide revêtu sur ses deux faces d'une couche de mousse assurant à la fois l'étanchéité et l'isolation phonique dudit volet.

Un tel volet est rectangulaire et réalisé selon l'invention dans un moule d'injection se composant d'une empreinte creuse supérieure et d'une empreinte creuse inférieure mesurant chacune environ 230 x 650 mm sur une épaisseur d'environ 25 mm, ces deux empreintes sont maintenues et centrées sur les plateaux de la machine d'injection, le mouvement des "lunettes" étant compensé par des ressorts de compression.

A l'état de repos, c'est-à-dire sans compression desdits ressorts, on place dans le fond de chaque empreinte une couche de mousse par exemple en polyuréthane, polyéthylène, polypropylène ou polyester, dont la densité peut aller de 10 à 100 Kg et d'une épaisseur de 5 à 25 mm.

Le processus de fabrication s'établit alors comme suit :
- Dans un premier temps, avant fermeture du moule, on pulvérise de l'eau sur les surfaces en regard des deux couches de mousse, de manière à réaliser un film aqueux ayant pour effet de saturer d'eau les cellules superficielles ouvertes desdites surfaces, et comme avantage supplémentaire d'accélérer la solidification de la matière plastique et de limiter la fusion de la mousse.
- Dans un second temps, on ferme le moule : l'effet des ressorts permet de comprimer les mousses et de diminuer la hauteur des empreintes. Lorsque l'outil est totalement fermé, la compression des couches de mousse a pour conséquence que l'épaisseur totale obtenue est égale à deux épaisseurs de mousse comprimée plus une épaisseur de ladite matière plastique de l'ordre par exemple de 4 mm.
- Dans un troisième temps, le cycle continue par l'injection de la matière plastique à l'état fondu par un canal débouchant dans la pièce au niveau de la zone de séparation des deux mousses.

Les pressions d'injection varient de 20 à 70 bars (selon la mousse choisie), les températures d'injection étant adaptées à la matière transformée, à savoir par exemple polypropylène environ 250° C, ABS environ 270° C, polyamide environ 300° C.

La pression d'injection étant supérieure à la force de compression (par exemple 50 bars pour 30 bars), la matière fondue écarte les deux faces en regard des flans de mousse ainsi comprimés à environ un vingtième de leur épaisseur initiale, l'épaisseur de la portion rigide du volet est réalisée avec des épaisseurs de 2 à 4 mm, la liaison de ladite portion rigide avec les surfaces extérieures de la mousse étant faite par la fusion de la matière, le film aqueux permettant de maîtriser l'adhérence et l'épaisseur des mousses.

A l'ouverture de l'outil, on relâche complètement la pression sur les empreintes, la mousse solidement liée à la plaque centrale, reprend son épaisseur initiale de 5 à 25 mm de chaque côté de ladite plaque.

Le volet terminé se présente donc sous forme d'une plaque rigide d'une épaisseur de l'ordre de 2 à 4 mm, recouvert sur chaque face par une couche de mousse souple de 5 à 25 mm d'épaisseur, ce qui était le but recherché.

Bien entendu, comme déjà indiqué, le processus en trois temps décrit ci-dessus et qui représente le principe de l'invention, pourra être mis en oeuvre de manière équivalente moyennant seulement l'adaptation des divers paramètres en fonction des dimensions de la pièce et de la nature spécifique des matériaux employés, tout en demeurant dans le cadre de l'invention tel que défini dans les revendications.

## Revendications

1. Procédé pour la fabrication d'objets ou de pièces destinés notamment à l'industrie automobile, par exemple volets d'obturation de conduites de ventilation, et comportant une première portion en matière plastique rigide, recouverte sur au moins une face par une seconde portion en matériau poreux souple ou mousse avec laquelle elle est réunie de manière unitaire, procédé du type dans lequel ladite matière plastique est injectée à l'état fondu dans un moule dans au moins un élément duquel est disposée ladite seconde portion en matériau poreux souple, et cette seconde portion est soumise à une force de compression de manière à en rétrécir les pores pour empêcher au moins partiellement la matière fondue de pénétrer dans ces pores, la liaison entre la première portion en matière plastique rigide et la seconde portion en matériau poreux souple ne s'établissant ainsi que dans la zone superficielle de ladite seconde portion,
caractérisé en ce que
préalablement à la compression de ladite seconde portion en matériau poreux souple, la zone superficielle de cette portion avec laquelle la matière plastique fondue est destinée à être amenée en contact est soumise à une humidification, de manière telle que les cellules ouvertes superficielles dudit matériau poreux souple soient remplies d'eau, ce qui interdit ainsi à la matière plastique fondue d'y pénétrer lors de l'injection.

2. Procédé selon la revendication 1, caractérisé en ce que, ladite pièce comportant des portions en matériau poreux souples fixées sur les deux faces de la portion en matière plastique rigide, chacune desdites portions de matériau poreux souple est disposée dans chacun des deux éléments d'un moule et est soumise à une humidification avant sa compression par fermeture du moule, ladite matière plastique fondue étant injectée dans la zone de contact entre les deux couches de matériau poreux souple comprimé et imbibé d'eau, de manière à écarter ces deux couches d'une distance égale à l'épaisseur de ladite portion de matière plastique rigide.

## Claims

1. Process for the manufacture of objects or parts destined in particular for the automobile industry, e.g. flaps for closing ventilation ducts, and comprising a first portion in rigid plastic material, covered on at least one face by a second portion in a flexible porous foam material to which it is joined to form a single piece, a process of the type in which the said plastic material is injected in a molten state into a mould in at least one element of which is situated the second portion in flexible porous material, and this second portion is subjected to a compressive force so as to shrink its pores in order to at least partially prevent the molten material from penetrating into these pores, the link between the first portion in rigid plastic material and the second portion in flexible porous material thus only forming in the superficial zone of the said second portion,
characterised by the fact that
prior to the compression of the said second portion in flexible porous material, the superficial zone of that portion with which the molten plastic material is destined to be brought into contact is subjected to dampening, in such a way that the open superficial cells of the said flexible porous material are filled with water, which thus prevents the molten flexible material from penetrating into them when injection occurs.

2. Process according to claim 1, characterised by the fact that, the said part comprising portions in flexible porous material fixed to the two faces of the portion in rigid plastic material, each of the said portions of flexible porous material is situated in each of the two elements of a mould and is subjected to dampening before its compression by the closure of the mould, the said molten plastic material being injected into the zone of contact between the two layers of flexible porous material, compressed and impregnated with water, so as to separate these two layers by a distance equal to the thickness of the said portion in rigid plastic material.

## Patentansprüche

1. Verfahren für die Herstellung von Gegenständen oder Teilen, die insbesondere für die Kraftfahrzeugindustrie bestimmt sind, z. B. Verschlußklappen für Belüftungsleitungen, und einen ersten Abschnitt aus starrem Kunststoffmaterial enthalten, der aus wenigstens einer Fläche durch einen zweiten Abschnitt aus biegsamem oder schaumartigen, porösen Material bedeckt ist, mit dem er zu einem einzigen Teil vereinigt ist, wobei das Verfahren von den Typ ist, bei dem das Kunststoffmaterial im geschmolzenen Zustand in eine Gießform eingespritzt wird, wobei in wenigstens einem Element dieser Gießform der zweite Abschnitt aus biegsamen, porösen Material angeordnet ist, und dieser zweite Abschnitt einer Kompressionskraft in der Weise unterworfen wird, daß die Poren verkleinert werden, um wenigstens teilweise zu verhindern, daß das geschmolzene Material in diese Poren eindringt, wobei die Verbindung zwischen dem ersten Abschnitt aus starren Kunststoffmaterial und den zweiten Abschnitt aus biegsamem, porösen Material somit nur in der Oberflächenzone des zweiten Abschnitts geschaffen wird,
dadurch gekennzeichnet, daß
vor der Kompression des zweiten Abschnitts aus biegsamen, porösen Material die Oberflächenzone dieses Abschnitts, mit der das geschmolzene Kunststoffmaterial in Kontakt gelangen soll, einer Befeuchtung unterworfen wird, derart, daß die offenen Oberflächenzellen des biegsamen, porösen Materials mit Wasser gefüllt werden, wodurch verhindert wird, daß das geschmolzene Kunststoffmaterial beim Einspritzen in sie eindringt.

2. Verfahren nach Anspruch 1, dadurch gekennzeichnet, daß dann, wenn das Teil Abschnitte aus biegsamem, porösen Material enthält, die auf den beiden Flachen des Abschnitts aus starren Kunststoffmaterial befestigt sind, jeder dieser Abschnitte aus biegsamen, porösen Material in jedem der zwei Elemente einer Gießform angeordnet ist und vor seiner Komprimierung durch schließen der Gießform einer Befeuchtung unterworfen wird, wobei das geschmolzene Kunststoffmaterial in die Kontaktzone zwischen Gen zwei Schichten aus biegsamem, porösen Material, das komprimiert und wasserdurchtrankt ist, eingespritzt wird, derart, daß diese zwei Schichten um eine Strecke beabstandet sind, die gleich der Dicke des Abschnitts aus starrem Kunststoffmaterial ist.
